# EUROPÄISCHE PATENTSCHRIFT

(11) **EP 1 198 341 B1**
(45) Veröffentlichungstag und Bekanntmachung des Hinweises auf die Patenterteilung: **12.03.2003**
(21) Anmeldenummer: 00949138.2
(22) Anmeldetag: 26.06.2000
(51) Int. Cl.: B29C 67/00, B23K 26/00, B23K 26/14

(54) **VORRICHTUNG UND VERFAHREN ZUR HERSTELLUNG VON BAUTEILEN AUS EINER WERKSTOFFKOMBINATION**
A DEVICE AND METHOD FOR THE PREPARATION OF BUILDING COMPONENTS FROM A COMBINATION OF MATERIALS
PROCEDE ET DISPOSITIF POUR PRODUIRE DES ELEMENTS A PARTIR D'UNE COMBINAISON DE MATERIAUX

(30) Priorität: 27.07.1999 DE 19935274
(43) Veröffentlichungstag der Anmeldung: 24.04.2002
(73) Patentinhaber: FRAUNHOFER-GESELLSCHAFT ZUR FÖRDERUNG DER ANGEWANDTEN FORSCHUNG E.V., 80636 München (DE)
(72) Erfinder: MEINERS, Wilhelm, D-52072 Aachen (DE); GASSER, Andres, D-52066 Aachen (DE); WISSENBACH, Konrad, D-52134 Herzogenrath (DE)
(74) Vertreter: Gagel, Roland, Dr.
(86) Internationale Anmeldenummer: DE0002093
(87) Internationale Veröffentlichungsnummer: WO01007239

(56) Entgegenhaltungen:
- EP-A- 0 322 257
- EP-A- 0 431 924
- DE-A- 4 415 783
- DE-A- 19 533 960
- DE-C- 19 649 865
- US-A- 5 578 227

## Beschreibung

Die vorliegende Erfindung betrifft eine Vorrichtung und ein Verfahren zur Herstellung von Bauteilen aus einer Werkstoffkombination. Hierbei handelt es sich insbesondere um Bauteile, in denen unterschiedliche Bereiche aus unterschiedlichen Werkstoffen bestehen, beispielsweise um bestimmten Bauteilabschnitten eine besondere Festigkeit zu verleihen.

Das vorgestellte Verfahren läßt sich in den Bereich der sogenannten generativen Fertigungsverfahren einordnen. Diese Fertigungsverfahren werden bisher vor allem für den Bereich des Rapid-Prototyping in der Produktentwicklung eingesetzt, um die Produktentwicklungszeit zu verkürzen sowie die Produktqualität zu steigern. Dies wird dadurch ermöglicht, daß mittels der Rapid-Prototyping Verfahren Prototypen schichtweise aus dem 3D CAD-Modell hergestellt werden können. Die zeitaufwendige Erstellung eines NC-Programmes für eine Fräs- oder Erodierbearbeitung oder die Herstellung formgebender Werkzeuge kann aufgrund dieser Verfahren entfallen.
Ein weiterer Vorteil bei der schichtweisen Herstellung der Bauteile besteht in der erreichbaren hohen Komplexität der herstellbaren Strukturen. Durch den schichtweisen Herstellungsprozeß können auch komplexe interne Strukturen aufgebaut werden, die mit konventionellen Fertigungsverfahren nicht erreichbar sind.
Die Entwicklung neuer bzw. die Weiterentwicklung bestehender generativer Verfahren hat zum Ziel, möglichst seriennahe oder sogar serienidentische Werkstoffe zu verarbeiten. Beim Einsatz serienidentischer Werkstoffe können diese Verfahren daher nicht nur für den Bereich des Rapid-Prototyping eingesetzt werden, sondern auch als Fertigungsverfahren für die Serienprodukte selbst.
Bekannte generative Fertigungsverfahren, wie beispielsweise das selektive Laserstrahlschmelzen (SLPR) oder das sogenannte Laserstrahlgenerieren, ermöglichen bereits die Herstellung von Bauteilen aus seriennahen oder serienidentischen metallischen Werkstoffen. Bei beiden Verfahren werden metallische Bauteile schichtweise aus einem Pulverwerkstoff hergestellt. Die Verfahren ermöglichen die Fertigung von Bauteilen mit einer Bauteildichte von ca. 100%, so daß sie eine entsprechend hohe Festigkeit aufweisen. Beide genannten Verfahren beruhen allerdings auf unterschiedlichen Grundprinzipien, die unterschiedliche Einschränkungen bezüglich der herstellbaren Bauteile nach sich ziehen.

Das selektive Laserstrahlschmelzen ist ein zweistufiger Prozeß. Bei diesem Prozeß wird zunächst eine ebene Schicht eines metallischen Pulverwerkstoffs auf eine Plattform für das Bauteil aufgebracht. Im nächsten Schritt wird die herzustellende Form bzw. Kontur der Schicht mit einem Laserstrahl abgetastet und das Pulver im abgetasteten Bereich spurweise aufgeschmolzen. Auf diese Weise wird das Bauteil Schicht für Schicht aufgebaut.
Ein Beispiel für ein derartiges Verfahren, bei dem eine Vorrichtung gemäß dem Oberbegriff des vorliegenden Patentanspruches 1 eingesetzt wird, ist in der DE 196 49 865 C1 beschrieben. Bei diesem Verfahren wird ein bindemittel- und flußmittelfreies metallisches Werkstoffpulver auf die Bauplattform aufgebracht und durch den Laserstrahl entsprechend der Bauteilgeometrie auf Schmelztemperatur erhitzt. Die Energie des Laserstrahls wird so gewählt, daß das metallische Werkstoffpulver an der Auftreffstelle des Laserstrahls über seine gesamte Schichtdicke vollständig aufgeschmolzen wird. Der Laserstrahl wird hierbei in mehreren Spuren derart über den vorgegebenen Bereich der jeweiligen Werkstoffpulverschicht geführt, daß jede folgende Spur des Laserstrahls die vorherige Spur teilweise überlappt. Gleichzeitig wird eine Schutzgasatmosphäre über der Wechselwirkungszone des Laserstrahls mit dem metallischen Werkstoffpulver aufrechterhalten, um Fehlstellen zu vermeiden, die beispielsweise durch Oxidation hervorgerufen werden können.

Das Verfahren des selektiven Laserstrahlschmelzens ermöglicht die Herstellung beliebig komplexer Bauteile mit guter Detailtreue und hoher Präzision.
Ein wesentlicher Nachteil dieses Verfahrens ist allerdings das eingeschränkte Spektrum der mit dem Verfahren verarbeitbaren Werkstoffe. So lassen sich insbesondere Hartstoffe, wie zum Beispiel Karbide, nur ungenügend verarbeiten, so daß eine Bauteildichte von 100% mit diesen Materialien nur schwer oder gar nicht erreichbar ist. Ein weiterer Nachteil des Verfahrens besteht darin, daß ein Wechsel des Pulverwerkstoffs während eines Bauprozesses bisher nur jeweils schichtweise, das heißt nach der Bearbeitung einer kompletten Schicht, nicht jedoch während der Bearbeitung innerhalb einer Schicht möglich ist. Es lassen sich daher mit diesem Verfahren keine Bauteile herstellen, die innerhalb einer Schicht lokal einen weiteren Werkstoff aufweisen. So wäre es in vielen Anwendungsbereichen beispielsweise wünschenswert, Bauteile an stark beanspruchten Stellen zusätzlich mit einem Hartstoff zu verstärken.

Das Verfahren des Laserstrahlgenerierens ist ein einstufiger Prozeß. Bei diesem Verfahren wird der Werkstoff als Draht oder Pulver über eine Zufuhreinheit kontinuierlich in den Fokus des Laserstrahles eingebracht. Werkstoffzufuhr und Energieeinbringung durch den Laserstrahl erfolgen simultan. Im Falle eines pulverförmigen Werkstoffes wird das Metallpulver hierbei vorzugsweise durch einen Inertgasstrom zu einer Pulverdüse geführt und mit dieser auf die Bearbeitungsstelle fokussiert. Der Laserstrahl und die Zufuhreinheit sind zueinander ortsfest und werden gemäß der aufzubauenden Form bzw. Kontur des Bauteiles in der jeweiligen Schicht bewegt. Auch hierbei wird das Bauteil Schicht für Schicht durch Abtasten der entsprechenden Form mit dem Laserstrahl aufgebaut.
Die DE 195 33 960 A1 zeigt ein Beispiel für ein derartiges Verfahren sowie eine zugehörige Vorrichtung zur Herstellung von metallischen Werkstücken, bei denen metallisches Werkstoffpulver mit einer Pulverdüse koaxial zu einem Laserstrahl auf das Werkstück aufgebracht und spurweise aufgeschmolzen wird. In dieser Druckschrift wird auch das Aufbringen einer Schicht aus unterschiedlichen Werkstoffen sowie das Absaugen oder Abblasen von nicht geschmolzenem Werkstoffpulver von der Werkstückoberfläche beschrieben. Der zweite Werkstoff wird bei dem Verfahren bzw. der Vorrichtung dieser Druckschrift offensichtlich durch die gleiche Pulverdüse wie der erste Werkstoff auf die Werkstückoberfläche aufgebracht.

Die DE 44 15 783 offenbart ein Verfahren zur Freiformherstellung von Werkstücken durch Aufbringen und schichtweises Anschmelzen von Metallpulver. Das Metallpulver wird hierbei ebenfalls über eine Pulverdüse spurweise aufgebracht und mit dem Laserstrahl angeschmolzen.

Die US 5,578,227 zeigt ein Verfahren sowie eine Vorrichtung zum Aufbau eines dreidimensionalen Modells durch schichtweises Aufbringen und Aufschmelzen von drahtförmigem Material mit einem Laserstrahl auf die jeweils darunter liegende Schicht.

Ein Vorteil des Verfahrens des Laserstrahlgenerierens gegenüber dem Verfahren des selektiven Laserstrahlschmelzens besteht vor allem in der Vielzahl der mit dem Verfahren verarbeitbaren metallischen Werkstoffe. Weiterhin lassen sich mit diesem Verfahren auch Hartstoffe gut verarbeiten.
Im Gegensatz zum Verfahren des selektiven Laserstrahlschmelzens ist die Komplexität der Bauteile, die mit dem Verfahren des Laserstrahlgenerierens hergestellt werden können jedoch nur gering. So ist insbesondere bei filigranen Bauteilelementen mit Abmessungen von unter 1 mm keine ausreichende Detailtreue mehr gewährleistet.

Die EP 0 431 924 zeigt als weitere Möglichkeit des Aufbaus von Bauteilen eine 3-D-Drucktechnik für das Rapid-Prototyping, bei der die einzelnen Schichten des schichtweisen Aufbaus des Werkstücks durch Zugabe eines Bindemittels mit einer Tintenstrahltechnik lokal verfestigt werden.
Die EP 0 322 257 beschreibt ein Verfahren sowie eine Vorrichtung zum schichtweisen Aufbau eines Werkstücks aus einer härtbaren Flüssigkeit. Die Härtung erfolgt wiederum durch Abtastung mit einem Laserstrahl. Nichtgehärtete Bereiche werden anschließend mit einer Absaugvorrichtung abgesaugt und mit einem Stützmaterial gefüllt, das nach der Fertigstellung des Werkstücks wieder entfernt werden kann. Zum lokalen Absaugen nichtverfestigter Bereiche wird eine Absaugvorrichtung eingesetzt.

Die Aufgabe der vorliegenden Erfindung besteht darin, eine Vorrichtung und ein Verfahren anzugeben, die die Herstellung von komplexen Bauteilen aus einer Werkstoffkombination ermöglichen, so daß einzelne Bereiche des Bauteils aus unterschiedlichen Werkstoffen bestehen können.

Die Aufgabe wird mit der Vorrichtung bzw. dem Verfahren nach Anspruch 1 bzw. 11 gelöst. Vorteilhafte Ausgestaltungen der Vorrichtung und des Verfahrens sind Gegenstand der Unteransprüche.

Die erfindungsgemäße Vorrichtung weist, ebenso wie die Vorrichtungen für das selektive Laserstrahlschmelzen, eine Bodenfläche mit einer absenkbaren Bauplattform für das Bauteil, eine Zufuhreinrichtung mit einem Mechanismus zur Nivellierung eines ersten Werkstoffes in einer Bearbeitungsebene über der Bauplattform sowie eine Laserlichtquelle zur Emission eines Laserstrahls auf. Weiterhin ist eine Bearbeitungseinheit vorgesehen, die eine Fokussieroptik zur Fokussierung des Laserstrahls auf die Bearbeitungsebene trägt. Die Bearbeitungseinheit wird mit Hilfe eines Positioniermechanismus in einer zur Bearbeitungsebene parallelen Ebene verfahren. Der Positioniermechanismus dient daher der Erzeugung der Abtastbewegung des Laserstrahls auf der Bearbeitungsebene entsprechend der zu fertigenden Bauteilform bzw. -kontur. Die Laserlichtquelle kann hierbei direkt an der Bearbeitungseinheit angebracht sein oder auch von außen in diese eingekoppelt werden. Im Unterschied zu den bekannten Vorrichtungen des selektiven Laserstrahlschmelzens weist die erfindungsgemäße Vorrichtung weiterhin eine Absaug- oder Abblaseinrichtung zum Absaugen von Werkstoff aus der Bearbeitungsebene sowie eine Zufuhreinrichtung für einen zweiten Werkstoff auf, mit der dieser zweite Werkstoff in den Fokusbereich des Laserstrahls gebracht werden kann. Bei dieser Zufuhreinrichtung kann es sich beispielsweise um eine Vorschubeinrichtung für einen in Drahtform vorliegenden Werkstoff handeln, der während der Bearbeitung dem Fokus des Laserstrahls in der Bearbeitungsebene zugeführt wird. Die Zufuhreinrichtung kann auch eine Düse sein, mit der pulverförmiger oder pastenförmiger zweiter Werkstoff während der Bearbeitung in den Fokusbereich des Lasers eingebracht wird. In beiden Fällen ist die Zufuhreinrichtung vorzugsweise direkt an der Bearbeitungseinheit befestigt, so daß die Zufuhreinrichtung mit dieser mitbewegt wird.
Die Zufuhreinrichtung kann jedoch auch durch einen zusätzlichen Mechanismus wie der Mechanismus gebildet sein, mit dem bereits der erste Werkstoff in der Bearbeitungsebene verteilt wird. Hierbei muß neben dem Vorratsbehälter für den ersten Werkstoff auch ein Vorratsbehälter für den zweiten Werkstoff vorgesehen sein.
Es versteht sich von selbst, daß nicht nur ein zweiter, sondern auch noch weitere Werkstoffe mit den genannten Mitteln zugeführt werden können.

Das Verfahren sieht den Aufbau des Bauteils durch schichtweises Aufbringen und Aufschmelzen unterschiedlicher Werkstoffe Schicht für Schicht vor. Der Aufbau zumindest einer der Schichten beinhaltet hierbei die folgenden Schritte:
a) Ein erster Werkstoff wird in der Bearbeitungsebene über der absenkbaren Bauplattform für das Bauteil gleichmäßig und eben verteilt. Anschließend wird die Form bzw. Kontur der zu erstellenden Schicht des Bauteiles mit dem auf die Bearbeitungsebene fokussierten Laserstrahl in den (ersten) Bereichen, in denen das Bauteil aus dem ersten Werkstoff bestehen soll, abgetastet, so daß der erste Werkstoff entsprechend der abgetasteten Form in diesen Bereichen aufgeschmolzen wird.
b) Der erste Werkstoff wird dann in zweiten Bereichen der Bearbeitungsebene, in denen das Bauteil aus einem zweiten Werkstoff oder einer chemischen Verbindung mit dem zweiten Werkstoff bestehen soll, abgesaugt oder weggeblasen, so daß in diesen Bereichen Raum für den zweiten Werkstoff geschaffen wird.
c) Danach wird der zweite Werkstoff in den zweiten Bereichen der Bearbeitungsebene aufgebracht. Anschließend wird die Form der Schicht des Bauteils mit einem auf die Bearbeitungsebene fokussierten Laserstrahl in den zweiten Bereichen abgetastet, wobei der zweite Werkstoff oder die Verbindung mit dem zweiten Werkstoff entsprechend der abgetasteten Form in den zweiten Bereichen aufgeschmolzen wird.
d) Nach Fertigstellung der Schicht wird die Bauplattform gegebenenfalls um die soeben hergestellte Dicke der Schicht abgesenkt, so daß die nächste Schicht aufgebracht werden kann.

Es entsteht somit eine Schicht aus aufgeschmolzenem und in Form einer schmelzmetallurgischen Verbindung wieder verfestigtem erstem und zweitem Werkstoff mit der Form bzw. Kontur der Schicht des entsprechenden Bauteils. Es können auch weitere Werkstoffe in gleicher Weise wie der zweite Werkstoff in die gleiche Schicht integriert werden, wobei in diesem Fall die für die weiteren Werkstoffe vorgesehenen Bereiche jeweils vor Aufbringen der weiteren Werkstoffe durch Absaugen oder Abblasen von übrigem Werkstoff befreit werden.

Das Aufbringen des zweiten Werkstoffes kann erfolgen, indem die Form bzw. Kontur der Schicht des Bauteils, die aus einem zweiten Werkstoff bestehen soll, mit dem Laserstrahl abgetastet wird, während der zweite Werkstoff über eine gesonderte Zufuhreinrichtung gebündelt in den Fokusbereich des Laserstrahls gebracht wird.
Das Aufbringen des zweiten Werkstoffes kann jedoch auch in gleicher Weise wie das Aufbringen des ersten Werksstoffes erfolgen, beispielsweise mit einem Schieber.

Die weiteren Schichten des Bauteils können entweder in gleicher Weise aus einer Kombination der Schritte a) bis c) bzw. d) gefertigt oder jeweils nur aus einem einzigen Werkstoff durch Anwendung der Schritte a) oder c) aufgebaut werden.
Bei dem vorgestellten Verfahren bietet sich somit die Möglichkeit, einzelne Schichten nur aus dem ersten Material oder nur aus dem zweiten Material herzustellen. Sollen innerhalb einer Schicht beide Materialien zum Einsatz kommen, so wird zunächst das erste Material in den entsprechenden Bereichen aufgeschmolzen, und anschließend das zweite Material aufgebracht. Vor dem Aufbringen und Aufschmelzen des zweiten Materials in den für dieses Material vorgesehenen Bereichen, wird über eine Saug- oder Blasvorrichtung das pulverförmige erste Material aus diesen Bereichen entfernt. Optional kann nach der Herstellung jeder Schicht die Oberfläche mit einer geeigneten Schleifvorrichtung zusätzlich eingeebnet werden.

Mit dem erfindungsgemäßen Verfahren und der zugehörigen Vorrichtung ist die Herstellung von beliebig komplexen Bauteilen möglich, wobei einzelne Bereiche des Bauteils aus unterschiedlichen Werkstoffen bestehen können. So kann der zweite Werkstoff beispielsweise an Stellen des Bauteils verwendet werden, die besonders beansprucht werden. Für diesen zweiten Werkstoff wird dann sinnvollerweise ein besonders verschleißarmes Material gewählt. Somit können Bauteile aus funktionsangepaßten Werkstoffkombinationen in einem Herstellungsschritt hergestellt werden.
So kann der Grundkörper des Bauteils beispielsweise aus einem Leichtbauwerkstoff mit beliebiger Komplexität und hoher Präzision hergestellt werden, indem hierfür der erste Schritt entsprechend dem selektiven Laserstrahlschmelzen eingesetzt wird, mit dem eine hohe Detailtreue und Komplexität zu erreichen ist. Die Bereiche des Bauteils, die im späteren Einsatz besonderen Beanspruchungen unterliegen, denen der Werkstoff des Grundkörpers nicht genügt, werden mit dem zweiten Schritt aus einem zweiten Werkstoff gefertigt. Diesem zweiten Schritt liegt vorzugsweise die Technik des Laserstrahlgenerierens zugrunde, so daß hierfür Werkstoffe mit besonderer Härte eingesetzt werden können. Mit dem vorgestellten Verfahren und der zugehörigen Vorrichtung können dabei insbesondere auch Bereiche im Inneren eines Bauteils aus dem zweiten Werkstoff aufgebaut werden, die beim späteren fertigen Bauteil nicht mehr zugänglich sind.

Mit dem erfindungsgemäßen Verfahren und der Vorrichtung ist es auch möglich, über die oder eine weitere Zufuhreinrichtung neben dem zweiten auch noch weitere Werkstoffe einzusetzen, so daß Bauteile mit mehr als zwei unterschiedlichen Werkstoffen herstellbar sind.
Die Erfindung vereint in einer bevorzugten Ausführungsform die Vorteile der aus dem Stand der Technik bekannten Techniken des selektiven Laserstrahlschmelzens und des Laserstrahlgenerierens. Dadurch können einzelne Bauteilbereiche mit funktionsgerechten Werkstoffen aufgebaut werden, wo hingegen in den anderen Bereichen einfachere Werkstoffe Verwendung finden können.

In einer bevorzugten Ausführungsform der erfindungsgemäßen Vorrichtung wurde die Bearbeitungseinheit mit der Zufuhreinrichtung für den zweiten Werkstoff ausgestattet.
Vorzugsweise weist diese Bearbeitungseinheit ein Ablenkelement für den Laserstrahl auf, mit dem dieser flächige Bereiche unterhalb der Bearbeitungseinheit ohne Bewegung des Positioniermechanismus abtasten kann. Dies erhöht die Bearbeitungsgeschwindigkeit während der Bearbeitung nach der Technik des selektiven Laserstrahlschmelzens. Das Ablenkelement wird hierbei vorzugsweise durch einen x-y-Scannerspiegel gebildet. Bei der Bearbeitung der ersten Bereiche, in denen der erste Werkstoff die Schicht bilden soll, wird somit der Positioniermechanismus nicht kontinuierlich sondern in bestimmten Schritten bewegt, wobei der Abstand zwischen den einzelnen Schritten über die Scanneroptik der Bearbeitungseinheit abgedeckt wird. Bei der Bearbeitung der zweiten Bereiche, bei denen der zweite Werkstoff über die Zufuhreinrichtung zugeführt wird, kommt lediglich der Positioniermechanismus zum Einsatz, der den Laserstrahl in diesem Fall kontinuierlich entsprechend der Form bzw. Kontur der zu erstellenden Bereiche führt. Bei der Umschaltung zwischen erstem und zweitem Werkstoff werden selbstverständlich Vorschubgeschwindigkeit und Laserleistung entsprechend angepaßt.
Der Positioniermechanismus selbst besteht vorzugsweise aus zwei senkrecht zueinander stehenden Linearachsen, mittels derer die Bearbeitungseinheit bewegt wird.

Die Erfindung wird nachfolgend anhand eines Ausführungsbeispiels in Verbindung mit der Figur nochmals erläutert.

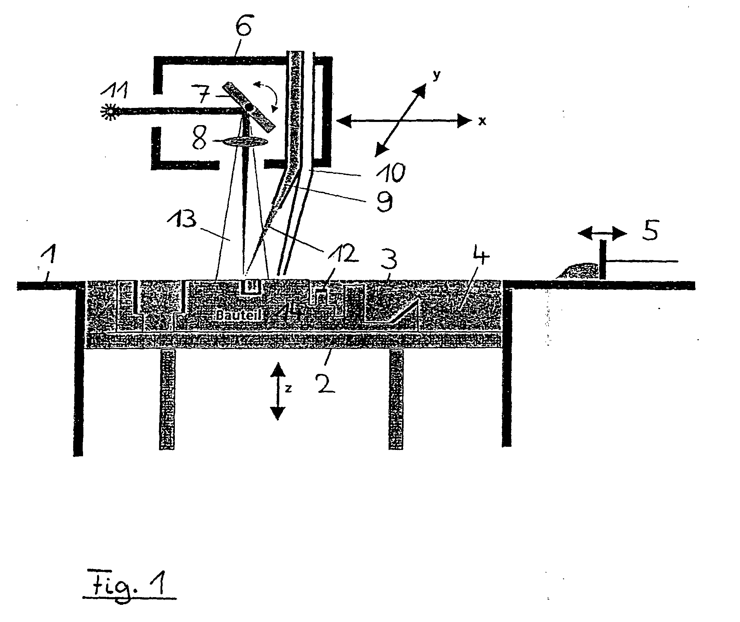

Figur 1 zeigt hierbei schematisch ein Beispiel für eine Vorrichtung zur Fertigung von Bauteilen aus Werkstoffkombinationen. In der Figur ist die Bodenfläche 1 dargestellt, in die eine Bauplattform 2 eingelassen ist. Die Bauplattform ist in z-Richtung absenkbar. In dem vorliegenden Beispiel stellt die Ebene der Bodenfläche 1 gleichzeitig die Bearbeitungsebene 3 dar. Die Anlage ist ähnlich einer Anlage zum selektiven Laserstrahlschmelzen ausgestaltet und umfaßt neben dem Bauraum mit der absenkbaren Bauplattform auch einen Pulvervorratsbehälter für den pulverförmigen ersten Werkstoff 4, und einen Mechanismus zur gleichmäßigen Verteilung des pulverförmigen Werkstoffes 4 in der Bearbeitungsebene über der Bauplattform. Der Pulvervorratsbehälter ist in der Figur nicht dargestellt, ist jedoch ebenso angeordnet und bedienbar wie bei bekannten Anlagen zum Laserstrahlschmelzen. Als Mechanismus zur Nivellierung wird im vorliegenden Beispiel ein Schieber 5 eingesetzt.
Das mit dieser Vorrichtung ausführbare Verfahren und die daraus resultierenden Vorteile werden insbesondere durch den Aufbau des Bearbeitungskopfes 6 erreicht. Dieser Bearbeitungskopf beinhaltet im vorliegenden Beispiel einen x-y-Scanner 7 in Form von mindestens einem drehbaren Spiegel, eine Fokussierlinse 8 zur Fokussierung des von der Laserstrahlquelle emittierten Laserstrahles 11 auf die Bearbeitungsebene 3, eine Zufuhreinheit 9 für einen zweiten Werkstoff sowie eine Absaugvorrichtung 10.
Die Zufuhreinheit 9 ist im vorliegenden Beispiel als Pulverdüse ausgestaltet, mit der pulverförmiger zweiter Werkstoff 12 in Form eines Pulverstrahls in den Fokusbereich des Laserstrahls 11 fokussiert werden kann. Bei Zuführung des zweiten Werkstoffes in fester Form, das heißt in Form eines Drahtes, wird statt der Pulverdüse eine Vorschubvorrichtung für Draht im Bearbeitungskopf 6 eingesetzt. Der Bearbeitungskopf selbst ist auf einer x-y-Verfahreinheit montiert, die in der Figur nicht dargestellt ist. Eine derartige Positioniervorrichtung kann beispielsweise in Form einer Plottermechanik aufgebaut sein. Mit dieser x-y-Verfahreinheit kann der Bearbeitungskopf 6 an beliebige Stellen innerhalb einer zur Bodenfläche 1 bzw. Bearbeitungsebene 3 parallelen Ebene bewegt werden. Der Laserstrahl bleibt dadurch immer auf die Bearbeitungsebene fokussiert. Die Absaugvorrichtung 10 ist im vorliegenden Beispiel in Form einer Düse ausgestaltet, deren Breite das Absaugen von pulverförmigem ersten Werkstoff 4 in Bereichen, in denen die Schicht aus dem zweiten Werkstoff 12 gefertigt werden soll, ermöglicht.

Der Aufbau des Bauteils erfolgt schichtweise. Zunächst wird mit dem Nivelliersystem 5 eine Schicht des Pulverwerkstoffes 4 auf die Bauplattform 2 aufgebracht. Der entsprechende Bereich der Pulverschicht, der zum herzustellenden Grundkörper gehört, wird aus dem ersten Pulverwerkstoff 4 nach dem Prinzip des selektiven Laserstrahlschmelzens verfestigt. Hierzu wird der Laserstrahl 11 mittels des Scannerspiegels 7 über einen vorgegebenen Scanbereich 13 abgelenkt. Ist der vorgegebene Scanbereich 13, über den sich der Laserstrahl mit dem Scannerspiegel 7 bewegen läßt, kleiner als der aufzubauende Bereich des Bauteils, wird zunächst dieser Bereich des Scanfeldes bearbeitet. Danach wird der Bearbeitungskopf 6 mittels der Linearachsen des Positioniermechanismus in den nächsten zu bearbeitenden Bereich gefahren. Auf diese Weise wird die gesamte zu bearbeitende Fläche in kleinere Teilflächen bzw. Unterbereiche unterteilt, in denen die Abtastung jeweils nur über eine Bewegung des Scannerspiegels 7 erfolgt. Lediglich der zusätzlich erforderliche Transport von Teilfläche zu Teilfläche wird mit dem Positioniermechanismus durchgeführt. Während der Bearbeitung zum Aufbau der Schicht mit dem ersten Werkstoff, das heißt während der scannenden Bearbeitung mittels des Scannerspiegels 7, bleibt die Zufuhr des zweiten Werkstoffs 12 über die Zufuhreinheit 9 unterbrochen. Auf diese Weise wird beispielsweise der in Figur 1 dargestellte unterste Bereich des Bauteiles 14 aufgebaut. Die Bereiche des Bauteils 14 bzw. von Schichten des Bauteils 14, die zu den besonders beanspruchten Bereichen beim Einsatz des späteren fertigen Bauteils gehören, werden nach dem Prinzip des Laserstrahlgenerierens aus dem zweiten Werkstoff 12 aufgebaut. Als Material für diesen Werkstoff wird bevorzugt ein Hartstoff, beispielsweise ein Karbid, eingesetzt. Beim Aufbau einer Schicht, die beide Werkstoffe umfassen soll, wird zunächst der Schichtbereich mit dem ersten Werkstoff in den entsprechenden Bereichen gemäß der oben dargelegten Vorgehensweise hergestellt. Anschließend wird der Pulverwerkstoff 4 aus den Bereichen entfernt, die aus dem zweiten Werkstoff bestehen sollen. Diese Entfernung des pulverförmigen ersten Werkstoffes 4 erfolgt mit der Absaugvorrichtung 10. Beim anschließenden Laserstrahlgenerieren der Schichtbereiche aus dem zweiten Werkstoff 12 bleibt der Scannerspiegel 7 in einer festen Position. Der Laserstrahl 11 wird allein durch die Bewegung des Bearbeitungskopfes 6 mittels der Linearachsen des Positioniermechanismus über die zu bearbeitenden Bereiche geführt. Gleichzeitig mit dieser Bewegung wird der zweite Werkstoff 12 durch die Pulverdüse 9 in den Fokus des Laserstrahles 11 zugeführt und dort aufgeschmolzen. Nach Bearbeitung der Schicht wird die Bauplattform um eine Schichtdicke abgesenkt und die nächste Schicht bearbeitet.
Dieser Vorgang wiederholt sich Schicht für Schicht, bis das komplette Bauteil aufgebaut ist.
In der Figur erkennt man die aus unterschiedlichen Werkstoffen hergestellten Bereiche des Bauteiles. In der obersten Schicht des Bauteiles 14, die in der Figur gerade in Bearbeitung ist, erkennt man in vier kleinen Bereichen (in schwarzer Farbe), daß dort die Schicht zur Verstärkung aus dem zweiten Werkstoff 12 besteht.

Das grundlegende Verfahrensprinzip der bei der vorliegenden Vorrichtung und dem zugehörigen Verfahren eingesetzten Techniken der schmelzmetallurgischen Herstellung von Schichten ist dem Fachmann bekannt.
Selbst wenn im vorliegenden Ausführungsbeispiel sowie in den in der Beschreibung dargestellten Beispielen als erster Werkstoff ein Werkstoffpulver eingesetzt wurde, so ist selbstverständlich auch eine flüssige Phase dieses Werkstoffes, ebenso wie eine flüssige Phase des zweiten Werkstoffes, denkbar, ohne die wesentlichen Merkmale der erfindungsgemäßen Vorrichtung bzw. des erfindungsgemäßen Verfahrens verändern zu müssen. Ebenso lassen sich mit der Vorrichtung und dem Verfahren Bauteile herstellen, die nicht nur aus zwei, sondern aus drei oder mehr Werkstoffen bestehen. Hierfür muß lediglich die Zufuhr von Werkstoff über die Zufuhreinheit 9 mit anderen Werkstoffen versorgt werden. Dies ist auf einfache Weise während der Bearbeitung einer Schicht möglich. Mit dem Verfahren und der Vorrichtung lassen sich somit Bauteile herstellen, die aus unterschiedlichen Werkstoffen bestehen, so daß beispielsweise ein komplexes Bauteil an den erforderlichen Stellen durch Hartstoffe zusätzlich verstärkt werden kann. Das Einsatzspektrum für schnelle Fertigungsverfahren zur Herstellung von Serienprodukten wird damit deutlich vergrößert.

## Patentansprüche

1. Vorrichtung zur Herstellung von Bauteilen aus einer Werkstoffkombination, wobei die Vorrichtung
- eine Bodenfläche (1) mit einer absenkbaren Bauplattform (2) für das Bauteil (14),
- eine erste Zufuhreinrichtung mit einem Mechanismus (5) zur Nivellierung eines pulverförmigen Werkstoffes (4) in einer Bearbeitungsebene (3) über der Bauplattform (2),
- eine Laserlichtquelle zur Emission eines Laserstrahls (11),
- eine Bearbeitungseinheit (6) mit einer Fokussieroptik (8) zur Fokussierung des Laserstrahls auf die Bearbeitungsebene (3), und
- einen Positioniermechanismus aufweist, der die Bearbeitungseinheit (6) in einer zur Bearbeitungsebene (3) parallelen Ebene in beliebige Positionen über dem Bauteil (14) positionieren kann,
**dadurch gekennzeichnet,**
**daß** eine Absaug- oder Abblaseinrichtung (10) zum Absaugen bzw. Abblasen von Werkstoff aus der Bearbeitungsebene (3) sowie eine zweite Zufuhreinrichtung (9) für einen weiteren Werkstoff (12) vorgesehen sind.

2. Vorrichtung nach Anspruch 1,
**dadurch gekennzeichnet,**
**daß** die Absaug- oder Abblaseinrichtung (10) an der Bearbeitungseinheit (6) befestigt ist.

3. Vorrichtung nach Anspruch 1 oder 2,
**dadurch gekennzeichnet,**
**daß** die Bearbeitungseinheit (6) ein Ablenkelement (7) für den Laserstrahl (11) aufweist, mit dem dieser auf beliebige Stellen innerhalb eines von der jeweiligen Position des Positioniermechanismus abhängigen Bereiches der Bearbeitungsebene (3) abgelenkt werden kann.

4. Vorrichtung nach Anspruch 3,
**dadurch gekennzeichnet,**
**daß** das Ablenkelement (7) ein x-y-Scannerspiegelsystem ist.

5. Vorrichtung nach einem der Ansprüche 1 bis 4,
**dadurch gekennzeichnet,**
**daß** die zweite Zufuhreinrichtung (9) an der Bearbeitungseinheit (6) befestigt und so ausgestaltet ist, daß der weitere Werkstoff gebündelt in den Fokusbereich des Laserstrahls (11) gebracht werden kann.

6. Vorrichtung nach Anspruch 5,
**dadurch gekennzeichnet,**
**daß** die zweite Zufuhreinrichtung (9) eine auf den Fokusbereich des Laserstrahls gerichtete Düse für pulverförmige Werkstoffe ist.

7. Vorrichtung nach Anspruch 5,
**dadurch gekennzeichnet,**
**daß** die zweite Zufuhreinrichtung (9) eine Vorschubeinrichtung für drahtförmige Werkstoffe ist.

8. Vorrichtung nach einem der Ansprüche 1 bis 4,
**dadurch gekennzeichnet,**
**daß** die zweite Zufuhreinrichtung (9) einen vorratsbehälter für den weiteren Werkstoff (12) und einen Schieber umfaßt, der den weiteren Werkstoff (12) in der Bearbeitungsebene (3) über der Bauplattform (2) verteilt.

9. Vorrichtung nach einem der Ansprüche 1 bis 8,
**dadurch gekennzeichnet,**
**daß** der Positioniermechanismus eine x-y-Verfahreinheit mit zwei Linearachsen ist.

10. Vorrichtung nach einem der Ansprüche 1 bis 9,
**dadurch gekennzeichnet,**
**daß** der Mechanismus (5) zur Nivellierung die Form eines Schiebers aufweist.

11. Verfahren zur Herstellung von Bauteilen aus einer Werkstoffkombination aus zumindest einem ersten (4) und einem zweiten Werkstoff (12), bei dem das Bauteil (14) durch schichtweises Aufbringen und Aufschmelzen der Werkstoffe Schicht für Schicht aufgebaut wird, mit folgenden Schritten für zumindest eine der Schichten:
- Verteilen des ersten Werkstoffes (4) mit einem Nivelliermechanismus (5) in einer Bearbeitungsebene (3) über einer absenkbaren Bauplattform (2) für das Bauteil (14), und Abtasten der Form der Schicht des Bauteils (14) mit einem auf die Bearbeitungsebene (3) fokussierten Laserstrahl (11) in ersten Bereichen der Bearbeitungsebene (3), wobei der erste Werkstoff (4) entsprechend der abgetasteten Form in den ersten Bereichen aufgeschmolzen wird;
- Absaugen oder Abblasen des ersten Werkstoffes (4) in zweiten Bereichen der Bearbeitungsebene (3), in denen das Bauteil aus dem zweiten Werkstoff (12) oder einer Verbindung mit dem zweiten Werkstoff bestehen soll;
- Aufbringen des zweiten Werkstoffes (12) in den zweiten Bereichen der Bearbeitungsebene (3) und Abtasten der Form der Schicht des Bauteils (14) mit einem auf die Bearbeitungsebene (3) fokussierten Laserstrahl (11) in den zweiten Bereichen, wobei der zweite Werkstoff (12) oder die Verbindung mit dem zweiten Werkstoff entsprechend der abgetasteten Form in den zweiten Bereichen aufgeschmolzen wird; und
- Absenken der Bauplattform (2) um die Dicke der aufgeschmolzenen Schicht, falls eine weitere Schicht aufgebracht werden soll.

12. Verfahren nach Anspruch 11,
**dadurch gekennzeichnet,**
**daß** der zweite Werkstoff (12) über eine getrennte Zufuhreinrichtung (9) gebündelt in den Fokusbereich des Laserstrahls (11) gebracht wird.

13. Verfahren nach Anspruch 11,
**dadurch gekennzeichnet,**
**daß** der zweite Werkstoff (12) in gleicher Weise wie der erste Werkstoff (4) in den zweiten Bereichen der Bearbeitungsebene (3) aufgebracht wird.

14. Verfahren nach einem der Ansprüche 11 bis 13,
**dadurch gekennzeichnet,**
**daß** das Abtasten der Form jeder Schicht des Bauteils (14) in der Bearbeitungsebene (3) mittels eines Positioniermechanismus erfolgt, der eine Fokussieroptik (8) zur Fokussierung des Laserstrahls (11) trägt und die Fokussieroptik (8) in einer zur Bearbeitungsebene (3) parallelen Ebene auf beliebigen Bahnen über dem Bauteil (14) bewegen kann.

15. Verfahren nach Anspruch 14,
**dadurch gekennzeichnet,**
**daß** das Abtasten der ersten Bereiche durch aufeinanderfolgendes Abtasten von Unterbereichen erfolgt, über die der Laserstrahl (11) mittels einem mit dem Positioniermechanismus mitgeführten drehbar gelagerten Scannerelement (7) geführt wird, während das Abtasten der zweiten Bereiche bei feststehendem Scannerelement (7) erfolgt.

## Claims

1. A device for fabricating components from a combination of materials, with said device having
- a bottom surface (1) having a lowerable building platform (2) for the component (14),
- a first introduction mechanism with a mechanism (5) for leveling a powdered material (4) in a processing plane (3) above said building platform (2),
- a laser light source for emitting a laser beam (11),
- a processing unit (6) having a focusing optical system (8) for focusing said laser beam onto said processing plane (3), and
- a positioning mechanism which can position said processing unit (6) in any desired positions in a plane parallel to said processing plane (3) above said component (14),
**characterized in that** a suction or blow-off unit (10) for suctioning off respectively blowing off material from said processing plane (3) and a second introduction mechanism (9) for a further material (12) are provided.

2. A device according to claim 1,
**characterized in that** said suction or blow off unit (10) is attached to said processing unit (6).

3. A device according to claim 1 or 2,
**characterized in that** said processing unit (6) is provided with a deflecting element (7) for said laser beam (11), with which said laser beam can be deflected onto any desired point within a region of said processing plane (3) dependent on the respective position of said positioning mechanism.

4. A device according to claim 3,
**characterized in that** said deflecting element (7) is an X-Y scanning mirror system.

5. A device according to one of the claims 1 to 4,
**characterized in that** said second introduction mechanism (9) is attached to said processing unit (6) and designed in such a manner that said further material can be brought in a concentrated manner in the focal range of said laser beam (11).

6. A device according to claim 5,
**characterized in that** said second introduction mechanism (9) is a nozzle for powdered materials is directed onto said focal range of said laser beam.

7. A device according to claim 5,
**characterized in that** said second introduction mechanism (9) is a feed mechanism for wire-shaped materials.

8. A device according to one of the claims 1 to 4,
**characterized in that** said second introduction mechanism (9) comprises a supply tank for said further material (12) and a scraper which distributes said further material (12) in said processing plane (3) above said building platform (2).

9. A device according to one of the claims 1 to 8,
**characterized in that** said positioning mechanism is an X-Y moving unit having two linear axes.

10. A device according to one of the claims 1 to 9,
**characterized in that** said mechanism (5) for leveling has the form of a scraper.

11. A method of building components (14) from a combination of materials of at least a first (4) material and a second material (12), wherein said component (14) is built up by means of layer-wise application and melting of said materials layer for layer, having the following steps for at least one of said layers:
- distributing said first material (4) with a leveling mechanism (5) in a processing plane (3) above a lowerable building platform (2) for said component (14), and scanning the shape of the layer of said component (14) using a laser beam (11) focused onto said processing plane (3) in first regions of said processing plane (3), with said first material (4) being melted on according to said scanned shape of said first regions;
- suctioning off or blowing off said first material (4) in second regions of said processing plane (3) in which said component is sought to be made of said second material (12) or a chemical compound of said second material;
- applying said second material (12) in said second regions of said processing plane (3) and scanning the shape of the layer of said component (14) using a laser beam (11) focused onto said processing plane (3), with said second material (12) or said chemical compound of said second material being melted according to said scanned shape in said second regions; and
- lowering said building platform (2) the thickness of said melted layer if a further layer is sought to be applied.

12. A method according to claim 11,
**characterized in that** said second material (12) is brought in a concentrated manner in said focal range of said laser beam via a separate introduction mechanism (9).

13. A method according to claim 11,
**characterized in that** said second material (12) is applied in the same manner as said first material (4) in said second regions of said processing plane.

14. A method according to one of the claims 11 to 13,
**characterized in that** said scanning of the shape of each layer of said component (14) in said processing plane (3) occurs by means of a positioning mechanism which bears a focusing optical system (8) for focusing said laser beam (11) and can move said focusing optical system (8) on any desired paths in a plane parallel to said processing plane (3) above said component (14) .

15. A method according to claim 14,
**characterized in that** said scanning of said first regions is executed by means of successive scanning of subregions above which said laser beam (11) is led by means of a scanning element (7) which is borne in a rotatable manner and is led with said laser beam by said position mechanism, whereas scanning of said second regions is executed with a stationary scanning element (7).

## Revendications

1. Dispositif à fabriquer des composants d'une combinaison de matériaux, comprenant
- une surface de fond (1) à une plateforme de construction (2), à déplacement vers le bas, pour le composant (14),
- un premier moyen d'alimentation à un mécanisme (5) de nivellement d'un matériau (4) en poudre dans un plan de traitement (3) au-dessus de ladite plateforme de construction (2),
- une sourde de lumière laser à émettre un faisceau laser (11),
- une unité de traitement (6) à système optique de focalisation dudit faisceau laser sur ledit plan de traitement (3), et
- un mécanisme de positionnement, qui est capable de positionner ladite unité de traitement (6) en un plan parallèle audit plan de traitement (3) dans des positions quelconques au-dessus dudit composant (14),
**caractérisé en ce**
**qu'**une moyen aspirateur ou souffleur (10) est disposé à aspirer ou évacuer en soufflant du matériaux en dehors dudit plan de traitement (3), et en ce qu'un deuxième moyen d'alimentation (9) est formé pour un deuxième matériau (12).

2. Dispositif selon la revendication 1,
**caractérisé en ce**
**que** ledit moyen aspirateur ou souffleur (10) est fixé à ladite unité de traitement (6).

3. Dispositif selon la revendication 1 ou 2,
**caractérisé en ce**
**que** ladite unité de traitement (6) comprend un élément déviateur (7) pour ledit faisceau laser (11), moyennant duquel on peut dévier le faisceau laser aux positions quelconques au-dedans d'une zone du plan de traitement (3), qui dépend de la position respective dudit mécanisme de positionnement.

4. Dispositif selon la revendication 3,
**caractérisé en ce**
**que** ledit élément déviateur (7) est un système de balayage en X-Y aux miroirs.

5. Dispositif selon une quelconque des revendications 1 à 4,
**caractérisé en ce**
**que** ledit deuxième moyen d'alimentation (9) est fixé à ladite unité de traitement (6) et configuré de façon, qu'on puisse porter ledit deuxième matériau, sous forme concentré, dans la zone de foyer dudit faisceau laser (11).

6. Dispositif selon la revendication 5,
**caractérisé en ce**
**que** ledit deuxième moyen d'alimentation (9) est un injecteur pour des matériaux en poudre, qui et dirigé vers la zone de foyer dudit faisceau laser.

7. Dispositif selon la revendication 5,
**caractérisé en ce**
**que** ledit deuxième moyen d'alimentation (9) est un moyen d'avancement pour des matériaux sous forme de fils.

8. Dispositif selon une quelconque des revendications 1 à 4,
**caractérisé en ce**
**que** ledit deuxième moyen d'alimentation (9) comprend un réservoir à stocker ledit deuxième matériau (12) et une vanne d'arrêt, qui distribue ledit deuxième matériau (12) dans ledit plan de traitement (3) au-dessus de ladite plateforme de construction (2).

9. Dispositif selon une quelconque des revendications 1 à 8,
**caractérisé en ce**
**que** ledit mécanisme de positionnement est une unité de placement en X-Y à deux axes linéaires.

10. Dispositif selon une quelconque des revendications 1 à 9,
**caractérisé en ce**
**que** ledit mécanisme (5) de nivellement présente la forme d'un racloir.

11. Procédé à fabriquer des composants d'une combinaison de matériaux, composée d'au moins un premier matériau (4) et d'un deuxième matériau (12), dans lequel ledit composant (14) est constitué par dépôt et fusions desdits matériaux sous forme stratifiée, en couches, comprenant les opérations suivantes pour au moins une desdites couches :
- distribution dudit premier matériau (4) moyennant un mécanisme de nivellement (5) dans un plan de traitement (3) au-dessus d'une plateforme de construction, à déplacement vers le bas, pour ledit composant (14) et balayage de la forme de la couche dudit composant (14) moyennant un faisceau laser (11) focalisé sur ledit plan de traitement (3), dans des premières zones dudit plan de traitement 3), en déposant par fusion ledit premier matériau (4) dans lesdites premières zones en correspondance avec la forme balayée ;
- aspiration ou évacuation en soufflant dudit premier matériau (4) dans des deuxièmes zones dudit plan de traitement (3), où ledit composant est à construire dudit deuxième matériau (12) ou d'une combinaison avec ledit deuxième matériau ;
- dépôt dudit deuxième matériau (12) dans lesdites deuxièmes zones dudit plan de traitement (3) et balayage de la forme de la couche dudit composant (14) moyennant un faisceau laser (11) focalisé sur ledit plan de traitement (3) dans lesdites deuxièmes zones, en déposant, par fusion, dudit deuxième matériau (12) ou de ladite combinaison avec ledit deuxième matériau, en correspondance avec la forme balayée, dans lesdites deuxièmes zones ; et
- abaissement de ladite plateforme de construction (2) par l'épaisseur de la couche déposée par fusion si le dépôt d'une autre couche est envisagée.

12. Procédé selon la revendication 11,
**caractérisé en ce**
**que** ledit deuxième matériau (12) est porté, sous forme concentrée, dans la zone de foyer dudit faisceau laser (11) via un moyen séparé d'alimentation (9).

13. Procédé selon la revendication 11,
**caractérisé en ce**
**que** ledit deuxième matériau (12) est appliqué dans lesdites deuxièmes zones dudit plan de traitement, de la même façon que ledit premier matériau (4).

14. Procédé selon une quelconque des revendications 11 à 13,
**caractérisé en ce que** le balayage de la forme de chaque couche dudit composant (14) dans ledit plan de traitement (3) se fait moyennant un mécanisme de positionnement, qui porte un système optique de focalisation (8) à focaliser ledit faisceau laser et qui est apte à déplacer ledit système optique de focalisation (8) dans un plan parallèle audit plan de traitement (3) selon des voies arbitraires au-dessus dudit composant (14).

15. Procédé selon la revendication 14,
**caractérisé en ce**
**que** le balayage desdites premières zones se fait par balayage des zones partielles en succession, sur lesquelles on guide ledit faisceau laser (11) moyennant un élément de balayage (7) logé de façon rotative, qui est entraîné avec ledit mécanisme de positionnement, pendant que le balayage desdites deuxièmes zones se fait à l'élément de balayage (7) en position immobile.
